# DEMANDE DE BREVET EUROPEEN

(11) **EP 1 120 697 A1**
(43) Date de publication de la demande: **01.08.2001**
(21) Numéro de dépôt: 01400194.5
(22) Date de dépôt: 24.01.2001
(51) Int. Cl.: G05D 1/00, G05B 19/042

(54) **Ensemble de pilotage et/ou de contrôle d'organes fonctionnels d'un avion**

(30) Priorité: 24.01.2000 FR 0000860
(71) Demandeur: LABINAL, 78180 Montigny le Bretonneux (FR)
(72) Inventeur: Guillemin, Loîc Yann, 94700 Maisons Alfort (FR); Pradier, Jean-Clair, 78800 Houilles (FR); Ballarini, Pierre, 75017 Paris (FR); Barrois, Jacques Etienne Emmanuel, 93600 Aulnay Sous Bois (FR)
(74) Mandataire: Blot, Philippe Robert Emile

(57) **Abrégé**

L'ensemble (10) de pilotage et/ou de contrôle d'organes fonctionnels (32, 36, 40, 42, 46, 48, 54, 56) d'un avion comporte au moins deux modules (30, 34, 38, 44, 50, 52) de pilotage et/ou de contrôle d'organes fonctionnels et des passerelles de transfert de données entre lesdits modules et au moins un bus principal (14) de transport de données de l'avion. Il comporte au moins un bus série secondaire (16) permettant le transport de données suivant le protocole C.A.N.. Chaque module de pilotage et/ou de contrôle (30, 34, 38, 44, 50, 52) comporte au moins une interface (70) de communication avec au moins un bus série suivant le protocole C.A.N., les modules de pilotage et/ou de contrôle (30, 34, 38, 44, 50, 52) étant connectés au ou à chaque bus secondaire (16) au travers de la ou chaque interface de communication (70). Ledit ensemble comporte en outre au moins une passerelle de communication (18, 20) assurant le transfert de données entre le ou chaque bus principal (14) et le ou chaque bus secondaire (16).

## Description

La présente invention concerne un ensemble de pilotage et/ou de contrôle d'organes fonctionnels d'un avion, du type comportant au moins deux modules de pilotage et/ou de contrôle d'organes fonctionnels et des moyens de transfert de données entre lesdits modules et au moins un bus principal de transport de données de l'avion.

Dans les avions modernes, il est connu de relier entre eux les modules de pilotage et/ou de contrôle d'organes fonctionnels de l'avion au travers d'un ou plusieurs bus principaux de l'avion. Ces bus sont couramment des bus spécifiques au domaine de l'aviation, et notamment des bus utilisant les protocoles de bus série distribués de types ARINC 629, 1553 ou DIGIBUS. Ainsi, à titre d'exemple, pour la gestion des éléments mobiles des trains d'atterrissage d'un avion, plusieurs modules de pilotage et/ou de contrôle sont mis en oeuvre, ces derniers étant chacun reliés au bus principal de l'avion.

En particulier, pour les trains d'atterrissage droit et gauche, un module propre de pilotage et/ou de contrôle est mis en oeuvre pour assurer chacune des fonctions suivantes :
- le contrôle de la pression des pneumatiques de l'avion,
- la mesure de la température des organes de freinage,
- la gestion et le contrôle des moyens d'orientation des roues de l'appareil lorsque les trains d'atterrissage comportent des roues directrices mobiles,
- la gestion et le contrôle du système de freinage des roues, et
- la gestion et le contrôle des éléments mobiles liés aux trains d'atterrissage, aux portes et aux systèmes d'inversion de poussée.

Ainsi, pour les seuls trains d'atterrissage de l'avion, douze modules de pilotage et/ou de contrôle des organes fonctionnels sont reliés au bus principal de l'avion pour recevoir ou adresser des données.

Chaque module de pilotage et/ou de contrôle comporte un calculateur mettant en oeuvre un programme adapté afin d'assurer la fonction de pilotage et/ou de contrôle auquel il est dédié, ainsi qu'une interface de communication adaptée au protocole ARINC 629 du bus principal permettant l'échange de données entre le calculateur et le bus principal de l'avion.

Du fait de l'utilisation exclusivement aéronautique des bus de type ARINC 629, le coût des composants assurant la gestion du protocole dans l'interface de communication de chaque module est relativement élevé. En effet, les bus de ce type ont une diffusion restreinte, ne permettant pas un abaissement significatif des coûts de fabrication des composants spécifiquement dédiés.

Ainsi, l'ensemble des modules de pilotage et/ou de contrôle des organes fonctionnels est d'un coût important.

L'invention a pour but de proposer un ensemble de pilotage et/ou de contrôle d'organes fonctionnels d'un avion dans lequel chaque module de pilotage et/ou de contrôle peut communiquer avec un bus principal de transport de données de l'avion, mais dont le coût global est relativement réduit.

A cet effet, l'invention a pour objet un ensemble de pilotage et/ou de contrôle d'organes fonctionnels d'un avion du type précité, caractérisé en ce qu'il comporte au moins un bus série secondaire permettant le transport de données suivant le protocole C.A.N., en ce que chaque module de pilotage et/ou de contrôle comporte au moins une interface de communication avec le bus secondaire suivant le protocole C.A.N., les modules de pilotage et/ou de contrôle étant connectés au ou à chaque bus secondaire au travers de la ou chaque interface de communication, et en ce que ledit ensemble comporte en outre au moins une passerelle de communication assurant le transfert de données entre le ou chaque bus principal et le ou chaque bus secondaire.

Suivant des modes particuliers de réalisation, l'ensemble de pilotage et/ou de contrôle comporte une ou plusieurs des caractéristiques suivantes :
- il comporte une carte de fond de panier dans laquelle est intégré le ou chaque bus secondaire, la carte de fond de panier et chaque module de pilotage et/ou de contrôle comportent des connecteurs complémentaires de liaison du module au bus secondaire ;
- chaque module de pilotage et/ou de contrôle est intégré sur une carte adaptée pour être enfichée sur la carte de fond de panier par l'intermédiaire desdits connecteurs complémentaires ;
- la ou chaque passerelle de communication est adaptée pour assurer une conversion des données du protocole C.A.N. au protocole ARINC 629 du bus principal ; et
- il comporte au moins deux bus série secondaires permettant le transport de données suivant le protocole C.A.N., ces deux bus étant montés en parallèle et assurant le transport simultanés des mêmes données entre les modules de pilotage et/ou de contrôle.

L'invention sera mieux comprise à la lecture de la description qui va suivre, donnée uniquement à titre d'exemple et faite en se référant à la figure unique qui est une vue schématique d'un ensemble de pilotage et/ou de contrôle selon l'invention.

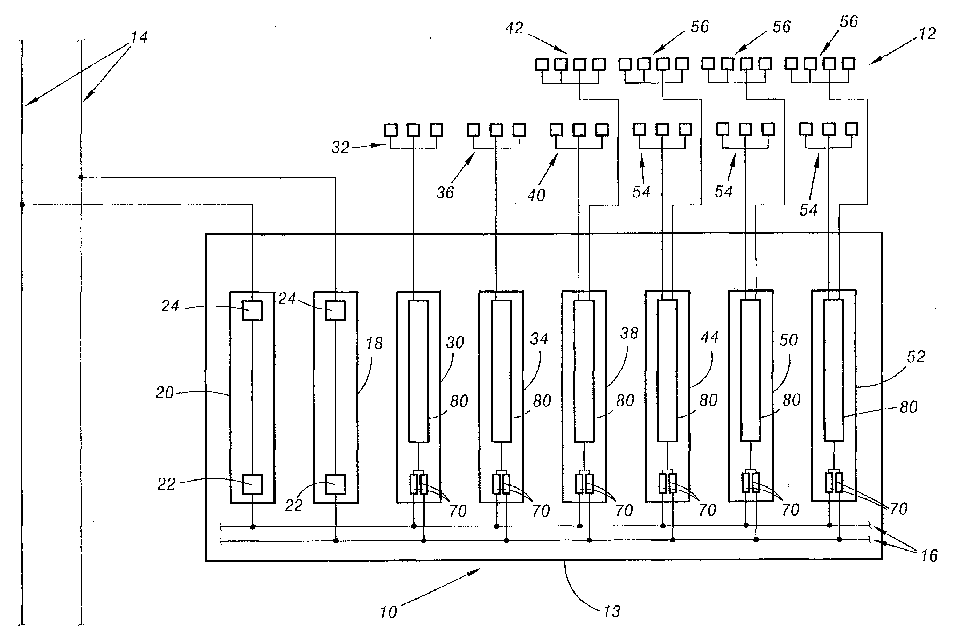

Sur la figure 1 est représenté un ensemble 10 de pilotage et/ou de contrôle d'organes fonctionnels selon l'invention. Ces organes fonctionnels sont désignés par la référence générale 12.

L'ensemble 10 constitue une unité dont les différents éléments sont réunis dans un même coffret ou armoire 13.

Cette unité est reliée à deux bus principaux 14 de transport de données de l'avion. Ces bus sont par exemple des bus utilisant le protocole ARINC 629. Les bus 14 sont redondants et assurent simultanément le transport des mêmes données augmentant le débit de transfert ainsi que la fiabilité de l'installation.

L'unité 10 comporte deux bus secondaires 16. Ces bus sont de type série et sont dédiés au transfert de données suivant le protocole C.A.N. (CONTROLLER AREA NETWORK). Ce protocole est défini par les documents suivants :
- CAN PROTOCOL SPECIFICATION V.L.O. - Société Robert BOSCH 1991 et 1992 ;
- ISO 11519-1

Véhicules routiers - communications en série de données à basse vitesse - partie 1 : Généralités et définitions, 1994 ;
- ISO 11519-2

Road vehicles low speed serial data communication : part 2 : Low speed controller area network CAN, 1994 ;
- ISO 11898

Road vehicles - Interchange of digital information controller area network - CAN - for high speed communication ISO standard, 1993.

Conformément aux spécifications du bus C.A.N., chaque bus est formé de deux conducteurs blindés ou non. Ces deux bus 16 sont redondants et assurent simultanément le transport des mêmes données, augmentant ainsi la fiabilité.

Chaque bus secondaire 16 est relié à un bus principal 14 de l'avion par une passerelle de communication 18 ou 20. Ces passerelles de communication, intégrées à l'unité 10, assurent le transfert de données entre un bus principal 14 et le bus secondaire 16 associé. Ce transfert de données est assuré par modification de la mise en forme des données, conformément au protocole de communication utilisé sur chacun des bus.

A cet effet, chaque passerelle comporte une première interface 22 de type C.A.N. reliée au bus secondaire 16 associé. Cette interface est adaptée pour définir et recevoir des messages suivant le protocole C.A.N. utilisé sur le bus 16.

La première interface 22 est reliée à une seconde interface 24 de type ARINC 629. Cette interface est reliée à l'un des bus principaux 14. Elle assure la définition et la réception de messages suivant le protocole ARINC 629 du bus principal.

Ainsi, chaque passerelle est adaptée pour effectuer une conversion entre les protocoles des deux bus.

L'unité 10 comporte en outre plusieurs modules de pilotage et/ou de contrôle des organes fonctionnels 12. Ces modules sont chacun reliés aux bus secondaires 16, afin d'émettre et/ou de recevoir des données.

A titre d'exemple, le module désigné par la référence 30 est adapté pour effectuer un suivi de la pression des pneumatiques des trains d'atterrissage de l'avion. A cet effet, le module 30 est relié à des éléments d'acquisition de pression 32.

Le module 34 est dédié au suivi de la température des organes de freinage du train d'atterrissage. A cet effet, il est relié à des capteurs de température 36.

Les informations recueillies par les modules 30 et 34 sont destinées à être adressées au poste de pilotage de l'avion au travers du bus 14, ces informations étant alors mises à la disposition de l'équipage.

Le module 38 est adapté pour gérer l'orientation des roues directrices du train d'atterrissage lors des phases de roulage de l'avion. A cet effet, le module 38 est relié à un ensemble de capteurs de position 40, ainsi qu'à un ensemble d'actionneurs 42 agissant sur les roues directrices du train d'atterrissage en fonction d'informations reçues depuis le poste de pilotage au travers des bus 14.

Des modules 44, 50, 52 sont adaptés pour gérer d'autres fonctions. Ceux-ci sont également reliés à des ensembles de capteurs 54 et à des ensembles d'actionneurs 56.

Chaque module de pilotage et/ou de contrôle comporte deux interfaces de communication 70 adaptées spécifiquement pour la mise en oeuvre du protocole C.A.N.. Les modules 30, 34, 38, 44, 50 et 52 sont ainsi reliés aux bus secondaires 16 par l'intermédiaire de ces interfaces 70.

Chaque module comporte en outre une unité de traitement d'informations 80 adaptée pour la mise en oeuvre d'une fonction de pilotage et/ou de contrôle dédiée au module considéré. L'unité de traitement d'informations 80 est reliée aux capteurs et/ou actionneurs associés au module, ainsi qu'aux interfaces de communication 70.

L'unité 10 est avantageusement formée d'une armoire ou d'un rack comportant une carte de fond de panier dans laquelle sont intégrés les paires de conducteurs constituant les bus 16. Cette carte de fond de panier comporte pour chaque module de pilotage et/ou de contrôle, un connecteur adapté pour coopérer avec un connecteur complémentaire porté par le module associé. Ces modules sont avantageusement constitués d'une ou plusieurs cartes pouvant être enfichées sur la carte de fond de panier.

De préférence, la carte de fond de panier comporte un circuit imprimé sur lequel des pistes forment les bus 16.

L'ensemble de pilotage et/ou de contrôle représenté sur la figure 10 fonctionne de la manière suivante.

Lorsqu'un équipement de pilotage de l'avion adresse des données de pilotage à l'un des modules de l'unité 10, ces données sont transmises vers l'unité 10 via les bus principaux 14 en utilisant le protocole ARINC 629 du bus principal. Ces données sont converties par les passerelles 18 et 20 en un format compatible avec le protocole C.A.N.. Ces données sont alors adressées vers le module de pilotage et/ou de contrôle destinataire via les deux bus secondaires 16 en utilisant le protocole C.A.N..

A l'inverse, lorsque des données recueillies par l'un des modules de pilotage et/ou de contrôle doivent être adressées vers un élément déporté de l'avion, ces données sont adressées par le module en cause vers les passerelles 18 et 20 au travers des bus secondaires 16 en utilisant le protocole C.A.N.. Les passerelles assurent une conversion du message utilisant le protocole C.A.N. en un message utilisant le protocole ARINC 629 du bus principal. Le message est alors adressé vers l'entité destinataire via les bus principaux 14.

On comprend que, quel que soit le nombre de modules de pilotage et/ou de contrôle de l'unité 10, seules deux interfaces de communication utilisant le protocole ARINC 629 du bus principal sont nécessaires, chaque module de pilotage et/ou de contrôle comportant seulement une interface de communication de type C.A.N..

Dans la mesure où les interfaces de communication utilisant le protocole C.A.N. sont d'un coût très réduit, les réseaux de type C.A.N. étant largement diffusés, le coût total de l'unité 10 est réduit, malgré la présence des deux passerelles 18 et 20.

La présence des deux bus C.A.N. désignés par la référence 16 améliore la fiabilité de l'unité. Toutefois, un unique bus pourrait être utilisé. Dans ce cas, une unique passerelle entre les protocoles C.A.N. et ARINC 629 est mise en oeuvre.

Un ensemble de pilotage et/ou de contrôle selon l'invention peut également être mis en oeuvre dans des avions dont les bus de transport principaux utilisent les protocoles 1553 et DIGIBUS.

## Revendications

1. Ensemble (10) de pilotage et/ou de contrôle d'organes fonctionnels (32, 36, 40, 42, 46, 48, 54, 56) d'un avion, du type comportant au moins deux modules (30, 34, 38, 44, 50, 52) de pilotage et/ou de contrôle d'organes fonctionnels et des moyens de transfert de données entre lesdits modules et au moins un bus principal (14) de transport de données de l'avion, caractérisé en ce qu'il comporte au moins un bus série secondaire (16) permettant le transport de données suivant le protocole C.A.N., en ce que chaque module de pilotage et/ou de contrôle (30, 34, 38, 44, 50, 52) comporte au moins une interface (70) de communication avec le bus secondaire (16) suivant le protocole C.A.N., les modules de pilotage et/ou de contrôle (30, 34, 38, 44, 50, 52) étant connectés au ou à chaque bus secondaire (16) au travers de la ou chaque interface de communication (70), et en ce que ledit ensemble comporte en outre au moins une passerelle de communication (18, 20) assurant le transfert de données entre le ou chaque bus principal (14) et le ou chaque bus secondaire (16).

2. Ensemble selon la revendication 1, caractérisé en ce qu'il comporte une carte de fond de panier dans laquelle est intégré le ou chaque bus secondaire (16), et en ce que la carte de fond de panier et chaque module de pilotage et/ou de contrôle comportent des connecteurs complémentaires de liaison du module au bus secondaire (16).

3. Ensemble selon la revendication 2, caractérisé en ce que chaque module de pilotage et/ou de contrôle est intégré sur une carte adaptée pour être enfichée sur la carte de fond de panier par l'intermédiaire desdits connecteurs complémentaires.

4. Ensemble selon l'une quelconque des revendications précédentes, caractérisé en ce que la ou chaque passerelle de communication (18, 20) est adaptée pour assurer une conversion des données du protocole C.A.N. au protocole ARINC 629 du bus principal.

5. Ensemble selon l'une quelconque des revendications précédentes, caractérisé en ce qu'il comporte au moins deux bus série secondaires (16) permettant le transport de données suivant le protocole C.A.N., ces deux bus étant montés en parallèle et assurant le transport simultanés des mêmes données entre les modules de pilotage et/ou de contrôle (30, 34, 38, 44, 50, 52).
